# EUROPÄISCHE PATENTSCHRIFT

(11) **EP 3 044 727 B1**
(45) Veröffentlichungstag und Bekanntmachung des Hinweises auf die Patenterteilung: **19.01.2022**
(21) Anmeldenummer: 14777256.0
(22) Anmeldetag: 04.09.2014
(51) Int. Cl.: G06K 9/00, H04N 13/204, H04N 13/271, H04N 13/275

(54) **VERFAHREN UND VORRICHTUNG ZUR OBJEKTERKENNUNG AUS TIEFENAUFGELÖSTEN BILDDATEN**
METHOD AND DEVICE FOR DETECTING OBJECTS FROM DEPTH-RESOLVED IMAGE DATA
PROCÉDÉ ET DISPOSITIF DE DÉTECTION D'OBJETS D'APRÈS DES DONNÉES D'IMAGE AYANT UNE RÉSOLUTION DE PROFONDEUR

(30) Priorität: 09.09.2013 DE 102013217915
(43) Veröffentlichungstag der Anmeldung: 20.07.2016
(73) Patentinhaber: Conti Temic microelectronic GmbH, 90411 Nürnberg (DE)
(72) Erfinder: THIEL, Robert, 88138 Niederstaufen (DE); BACHMANN, Alexander, 88239 Wangen im Allgäu (DE)
(74) Vertreter: Continental Corporation
(86) Internationale Anmeldenummer: PCT/DE2014/200443
(87) Internationale Veröffentlichungsnummer: WO 2015/032399

(56) Entgegenhaltungen:
- EP-A1- 2 811 423
- US-A1- 2007 183 669
- Bernt Schiele, Christian Wojek: "Kapitel 16: Kamerabasierte Fußgängerdetektion" In: Hermann Winner; Stephan Hakuli; Gabriele Wolf (Hrsg.): "Handbuch Fahrerassistenzsysteme: Grundlagen, Komponenten und Systeme für aktive Sicherheit und Komfort", 2009, Vieweg + Teubner, Wiesbaden, Germany, XP002733975, ISBN: 978-3-8348-0287-3 Seiten 223-235, section: "Systemorientierte Ansätze", S. 232-233; Abbildungen 16-15
- Christoph Stiller, Alexander Bachmann, Christian Duchow: "Kapitel 15: Maschinelles Sehen" In: Hermann Winner; Stephan Hakuli; Gabriele Wolf (Hrsg.): "Handbuch Fahrerassistenzsysteme: Grundlagen, Komponenten und Systeme für aktive Sicherheit und Komfort", 2009, Vieweg + Teubner, Wiesbaden, Deutschland 352440, XP002730622, ISBN: 978-3-8348-0287-3 Seiten 216-219, Seite 217 - Seite 218
- GAVRILA D M ET AL: "Multi-cue Pedestrian Detection and Tracking from a Moving Vehicle", INTERNATIONAL JOURNAL OF COMPUTER VISION, KLUWER ACADEMIC PUBLISHERS, BO, Bd. 73, Nr. 1, 17. Juli 2006 (2006-07-17), Seiten 41-59, XP019468627, ISSN: 1573-1405
- Stephen Gould: "Integrating Visual and Range Data for Robotic Object Detection", M2SFA2 2008: Workshop on Multi-camera and Multi-modal Sensor Fusion, 1 January 2008 (2008-01-01), XP055041887, Retrieved from the Internet: URL:http://users.cecs.anu.edu.au/~sgould/p apers/eccv08-vision3d.pdf [retrieved on 2012-10-23]

## Beschreibung

Die Erfindung betrifft ein Verfahren und eine Vorrichtung zur Objekterkennung aus tiefenaufgelösten Bilddaten, welches insbesondere in einem Fahrerassistenzsystem mit einer 3D- oder Stereokamera zum Einsatz kommt.

Fahrerassistenzsysteme mit einer Fahrzeugkamera finden zunehmend Verbreitung. Neben Monokameras werden hierbei auch 3D-Kameras bzw. Stereokameras eingesetzt. Bei Stereokameras ergibt sich aus der Bildinformation beider Kamerasensoren die Möglichkeit, pro Pixel eine Tiefeninformation zu errechnen. Ein daraus resultierendes Tiefenbild kann anschließend geclustert werden, um erhabene Objekte vor der Kamera zu detektieren.

EP 1 652 161 B2 zeigt eine Vorrichtung zur Klassifizierung wenigstens eines Objekts in einem Fahrzeugumfeld, die mittels einer Umfeldsensorik Objekte erfasst und anhand ihrer dreidimensionalen Form und ihrer Abmessungen klassifiziert. Eine Verwerfungsklasse ist hierbei vorgesehen für Objekte, deren dreidimensionalen Form und Abmessungen nicht mit den charakteristischen dreidimensionalen Formen und Abmessungen der vorgegebenen Klassen wie z.B. Lkw, Pkw, Motorrad, Fahrrad, Fußgänger etc. übereinstimmen.

Diese Verwerfungsklasse kann unter Umständen relevante Objekte enthalten, z.B. aufgrund fehlerbehafteter Erfassung bzw. Auswertung der Umfeldsensorik, die dann für Fahrerassistenzfunktionen nicht berücksichtigt werden, da die Objekte der Verwerfungsklasse ja verworfen werden.

Die Druckschrift Stephen Gould: "Integrating Visual and Range Data for Robotic Object Detection", M2SFA2 2008: Workshop on Multicamera and Multi-modal Sensor Fusion, 18. Oktober 2008, offenbart ein Verfahren zur Objekterkennung, bei dem sowohl ein von einer Videokamera aufgenommenes 2D-Bild als auch ein von einer 3D-Kamera aufgenommenes dreidimensionales Bild verwendet werden. Das Verfahren setzt zunächst ein rein Bild-basiertes Klassifikationsverfahren zur Auswertung und Klassifikation eines oder mehrerer Objekte in einem Bildbereich eines 2D-Bildes ein. Die Abmessungen eines individuell erkannten Objekts im zweidimensionalen Bild werden nach Abzug bestimmter Toleranzen auf 3D-Abmessungen in einem entsprechenden dreidimensionalen Bild abgebildet. Anschließend ermittelt das Verfahren mehrere 3D-Abmessungen des Objekts im dreidimensionalen Bild und nimmt diese 3D-Abmessungen in einen Merkmalsvektor auf. Dieser Merkmalsvektor wird schließlich für eine kombinierte Objekterkennung verwendet, welche sich sowohl auf zweidimensionale als auch auf dreidimensionale Informationen stützt. Typische klassenspezifische Dimensionen werden gelernt, indem für die kombinierte Objekterkennung logistische Klassifikatoren auf Trainingsdaten trainiert werden, die aus statischen Szenen gewonnen werden.

Aufgabe der vorliegenden Erfindung ist es, die genannten Schwierigkeiten bzw. Nachteile, die sich aus dem Stand der Technik ergeben, zu überwinden und ein verbessertes Verfahren zur Objekterkennung aus tiefenaufgelösten Bilddaten anzugeben. Ein Ausgangspunkt der vorliegenden Erfindung ist, dass z.B. zwei räumlich ineinander übergehende Objekte rein aus der Tiefeninformation nicht als zwei separate Objekte erkannt werden, sondern ein einzelnes größeres Objekt erkannt wird. Weder anhand seiner dreidimensionalen Form noch anhand seiner Abmessungen wird dieses größere (zusammengesetzte) Objekt richtig klassifiziert werden können.

Ein erfindungsgemäßes Verfahren zur Objekterkennung wird im Anspruch 1 definiert.

Die 3D-Kamera kann insbesondere eine Stereokamera sein und das 2D-Bild kann vorzugsweise mit einem der beiden Stereokamerasensoren aufgenommen werden. Alternative 3D-Kameras sind z.B. Time-of-Flight-Kameras, insbesondere ein Photonenmischdetektor (Photonic Mixer Device, PMD).

Mit der 3D-Kamera kann ein dreidimensionales Bild bzw. ein tiefenaufgelöstes Bild bzw. Tiefenbild aufgenommen werden. Aus diesen tiefenaufgelösten Bilddaten (Tiefenbild) können dreidimensional zusammenhängende Objekte gebildet werden.

Da die räumliche Position und Ausdehnung der gebildeten Objekte bekannt ist, kann insbesondere unter Kenntnis der Abbildungseigenschaften des monokularen Kamerasensors der Bereich im 2D-Bild bestimmt werden, in dem die gebildeten Objekte abgebildet werden. Zumindest dieser Bereich des 2D-Bildes wird ausgewertet und dort aufgefundene (2D-)Objekte werden klassifiziert. Die Auswertung im 2D-Bild umfasst bevorzugt eine Kantenerkennung, Intensitäts- bzw. Farbwertanalyse, Segmentierung und/oder Mustererkennung. Hieran kann sich vorteilhaft eine 2D-Objektbildung anschließen. Bei der Klassifizierung werden Objekte aus den 2D-Bilddaten unterschiedlichen Klassen von Objekten zugeordnet. Diese Zuordnung kann auch über Wahrscheinlichkeitsangaben erfolgen. Einer Objektklasse wie z.B. "Kleinstwagen", "Kleinwagen", "mittelgroßer Wagen", "Großer Wagen" "SUV", "Van", "Motorrad", "Radfahrer", "erwachsener Fußgänger", "Kind", "Rollstuhlfahrer" sind typische mittlere 3D-Abmessungen und ggfs. Formen zugeordnet. Unter Berücksichtigung dieser klassenspezifischen Eigenschaften bzw. 3D-Abmessungen, die sich aus dem 2D-Bild ergeben, kann schließlich das gebildete (dreidimensionale) Objekt in mindestens zwei einzelne Objekte geteilt werden. Sofern die klassenspezifischen Eigenschaften mit dem gebildeten Objekt hingegen hinreichend übereinstimmen, kann das gebildete Objekt verifiziert werden.

Bevorzugt stellen das Tiefenbild und das 2D-Bild zumindest teilweise überlappende Bereiche einer Fahrzeugumgebung dar. Dies ist insbesondere bei einer Fahrzeugstereokamera zur Umgebungsüberwachung der Fall. Tiefen- und 2D-Bild stellen vorzugsweise Daten für mindestens eine Fahrerassistenzfunktion bereit. Bekannte kamerabasierte Fahrerassistenzfunktionen sind z.B. eine Spurverlassenswarnung (LDW, Lane Departure Warning), eine Spurhalteunterstützung (LKA/LKS, Lane Keeping Assistance/System), eine Verkehrszeichenerkennung (TSR, Traffic Sign Recognition), ein Geschwindigkeitsbegrenzungsempfehlung (SLA, Speed Limit Assist), eine automatische Fernlichtsteuerung (IHC, Intelligent Headlamp Control), eine Kollisionswarnung (FCW, Forward Collision Warning), eine Niederschlags-/Regen- und/oder Taglichterkennung, eine automatische Längsregelung (ACC, Adaptive Cruise Control), eine Einparkunterstützung sowie automatische Notbrems- bzw. Notlenksysteme (EBA, Emergency Brake Assist oder ESA, Emergency Steering Assist).

In einer bevorzugten Ausführungsform wird mindestens ein 3D-Platzhalter entsprechend des Ergebnisses der Klassifizierung des oder der Objekte im 2D-Bild bestimmt und als Platzhalter für dieses Objekt im Tiefenbild berücksichtigt.

Vorteilhaft wird als 3D-Platzhalter ein Frustum verwendet. Das Frustum wird aus den typischen dreidimensionalen Abmessungen des im 2D-Bild klassifizierten Objekts und der aus dem Tiefenbild resultierenden Entfernung gebildet. Als dreidimensionale Form des Frustums kann entsprechend einer Fluchtpunktperspektive die eines Pyramidenstumpfs verwendet werden.

Gemäß einer bevorzugten Ausführungsform kann der 3D-Platzhalter Toleranzen berücksichtigen, die sich aus der 3D- und/oder 2D-Bilderfassung und -auswertung ergeben. So ist die dreidimensionale Positionsbestimmung fehlerbehaftet und z.B. Rauschen im 2D-Bild kann zu einer Ungenauigkeit in der Klassifizierung führen.

Vorteilhaft kann der 3D-Platzhalter die Streuung von 3D-Abmessungen innerhalb einer Klasse von Objekten berücksichtigen. Die Höhe kann bei der Klasse "erwachsener Fußgänger" beispielsweise zwischen 1,50 und 2,30 Metern um einen Mittelwert von z.B. 1,70 Meter streuen.

Vorzugsweise wird der Bereich des 3D-Platzhalters aus dem mindestens einen Objekt herausgetrennt, welches aus dem Tiefenbild gebildet wurde.

In einer bevorzugten Ausführungsform werden unter Berücksichtigung des mindestens einen 3D-Platzhalters aus dem Tiefenbild erneut Objekte gebildet, wobei eine Objektbildung über die Grenzen des 3D-Platzhalters hinaus erschwert wird. Toleranzen und Streuungen können hierbei durch unterschiedliche "Erschwernisse" berücksichtigt werden.

Vorzugsweise wird der 3D-Platzhalter mit dem aus dem Tiefenbild gebildeten mindestens einen Objekt verglichen und bei annähernder Übereinstimmung der entsprechenden Raumvolumina wird keine Teilung dieses Objekts vorgenommen. Das gebildete Objekt wird hierdurch verifiziert.

Die Erfindung betrifft zudem eine Vorrichtung zur Objekterkennung gemäß Anspruch 10.

Im Folgenden wird die Erfindung anhand von Ausführungsbeispielen und einer Figur näher erläutert.

Die einzige Figur zeigt schematisch einen Quader für das Tiefenbild eines Objekts (1), das mit einer Stereokamera aufgenommen wurde. Das Objekt besteht aus einer Rollstuhlfahrerin (2) und einem Pkw (3), z.B. einem Van. Da sich die Rollstuhlfahrerin (2) direkt vor dem Pkw (3) befindet, also keine räumliche Trennung zwischen diesen beiden vorliegt, werden beide als ein einzelnes Objekt aus einem 3D-Bild der Stereokamera ermittelt bzw. geclustert.

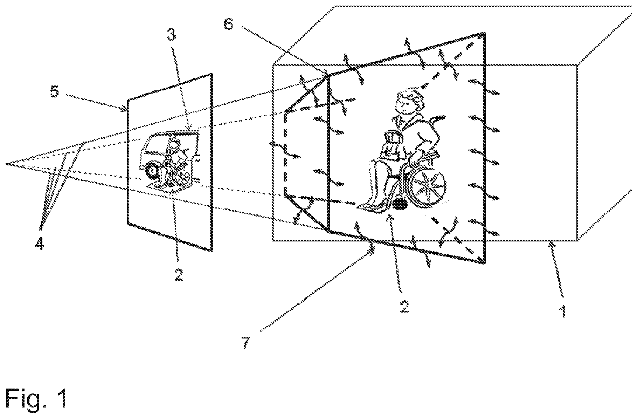

In der Darstellung nach Fig. 1 ist auch ein 2D-Bild (5) enthalten, welches vorzugsweise von einem der beiden Stereokamerasensoren aufgenommen wurde. Das dargestellte 2D-Bild (5) liegt in der virtuellen Bildebene der aufnehmenden Kamera und umfasst hier die Rollstuhlfahrerin (2) und zumindest teilweise den Pkw (3). Der Bildbereich des 2D-Bilds, der dem ermittelten Tiefenbild des Objekts (1) entspricht, lässt sich vorab bestimmen, so dass nur dieser Bildbereich im 2D-Bild weiter analysiert wird. Zur Analyse im 2D-Bild bietet sich ein an sich bekanntes Bildverarbeitungsverfahren in zweidimensionalen Bilddaten an, insbesondere eine Kantenerkennung, Intensitäts- bzw. Farbwertanalyse, Segmentierung und/oder Mustererkennung.

An das bzw. die Bildverarbeitungsverfahren schließt sich vorteilhaft eine Objektbildung und -klassifizierung basierend auf den 2D-Bilddaten an. Die Objektklassifizierung aus dem 2D-Bild ergibt vorliegend, dass zumindest ein erstes Objekt als "Rollstuhlfahrer" klassifiziert werden kann, möglicherweise kann auch ein zweites Objekt als "Pkw" oder "Van" klassifiziert werden. Möglicherweise kann das zweite Objekt hier nicht klassifiziert werden, da der Pkw nicht vollständig im 2D-Bild enthalten und zudem teilweise durch die Rollstuhlfahrerin verdeckt ist. Das ist jedoch nicht weiter entscheidend an dieser Stelle.

Zu dem erfolgreich als "Rollstuhlfahrer" klassifizierten Objekt wird nun ein Platzhalter (6) für das Tiefenbild gebildet. Dazu wird ein aus der Größe des im 2D-Bild (5) klassifizierten Objektes "Rollstuhlfahrer" und der aus dem Tiefenbild resultierenden Entfernung und der klassenspezifischen Tiefe des Objektes ein Frustum (6) aufgespannt. Dieses Frustum (6) berücksichtigt außerdem Toleranzen und Abweichungen, die durch die Genauigkeit der 3D-Erfassung, Rauschen im 2D-Bild und/oder Streuungen typischer Objektabmessungen einer Klasse um mittlere Objektabmessungen berücksichtigen. Das Frustum (6) erfüllt dadurch die Funktion eines Platzhalters. Dazu sind typische räumliche Abmessungen eines "Rollstuhlfahrers" anzunehmen. Mit Hilfe dieser Abmessungen und des aus dem Tiefenbild für jeden Pixel bekannten Abstands zur Kamera kann das Frustum als Projektion in das räumliche Sichtfeld (4) der Stereokamera ermittelt werden. Das Frustum (6) hat bei einer Fluchtpunktperspektive des Sichtfelds (4) die in der Figur schematisch dargestellte dreidimensionale Form eines Pyramidenstumpfs.

Mithilfe des Frustums (6) werden anschließend im Raum Verbindungen nach Außerhalb des Frustums fürs Clustering parametrierbar erschwert (7). Dadurch können Objekte, die sich im Tiefenbild nur schwer trennen lassen, im Raum sauber getrennt werden. Dies ist wie hier dargestellt der Fall für die Rollstuhlfahrerin (2) und den Pkw (3), in gleicher Weise gilt das auch für die Auflösung (Objektsplitting) von Gruppen von Fußgängern, einer an eine Hauswand gelehnte Person, sehr dicht aneinander geparkten Fahrzeugen oder anderen räumlich ineinander übergehenden Objekten.

Dies bietet für Fahrerassistenzfunktionen, die auf den erkannten Objekten basieren, den Vorteil, dass bei der abgebildeten Szene die Rollstuhlfahrerin (2) als eigenständiges Objekt zuverlässig erkannt wird und anschließend in vergleichbarer Weise auch der Pkw bzw. Van (3) erkannt wird.

Dagegen liefert die Erkennung aus dem Tiefenbild dieser Szene nur ein Objekt (1), welches zu ausgedehnt für beide der tatsächlich vorhandenen Objektklassen ist und in der Gefahr steht gar nicht klassifiziert werden zu können. Eine Schutzmaßnahme eines Fahrerassistenzsystems zugunsten der Rollstuhlfahrerin (2) unterbleibt möglicherweise, weil diese gar nicht als "Rollstuhlfahrer" erkannt wird.

### Bezugszeichenliste

- 1: Aus dem Tiefenbild gebildetes Objekt
- 2: Rollstuhlfahrerin
- 3: Pkw
- 4: Sichtfeld
- 5: 2D-Bild
- 6: Platzhalter/Frustum
- 7: Erschwerte Verbindung beim Clustering von außen in das Frustum bzw. vom Frustum nach außen

## Patentansprüche

1. Verfahren zur Objekterkennung umfassend die Schritte:
- Bildung eines dreidimensional zusammenhängenden Objekts aus einem dreidimensionalen Bild einer 3D-Kamera,
- Auswertung und Klassifikation eines oder mehrerer Objekte (2, 3) in einem Bildbereich eines 2D-Bildes (5), der dem gebildeten dreidimensional zusammenhängenden Objekt im dreidimensionalen Bild (1) entspricht,
- Zuordnung von typischen klassenspezifischen 3D-Abmessungen aufgrund der Klassifikation des Objekts oder der Objekte (2, 3) im 2D-Bild,
- Teilen des aus dem dreidimensionalen Bild gebildeten dreidimensional zusammenhängenden Objekts (1) unter Berücksichtigung der klassenspezifischen 3D-Abmessungen in mehrere einzelne dreidimensionale Objekte (2; 3), wenn das gebildete dreidimensional zusammenhängende Objekt zu ausgedehnt ist für die zugeordneten klassenspezifischen 3D-Abmessungen des oder der klassifizierten Objekte (2, 3) .

2. Verfahren nach Anspruch 1, wobei das dreidimensionale Bild mittels einer 3D-Kamera, insbesondere einer Fahrzeugstereokamera eines Fahrerassistenzsystems und das 2D-Bild (5) mittels eines monokularen Kamerasensors eines Fahrerassistenzsystems erfasst werden und zumindest teilweise überlappende Bereiche einer Fahrzeugumgebung darstellen.

3. Verfahren nach Anspruch 2, wobei der monokulare Kamerasensor einer der beiden Kamerasensoren einer Fahrzeugstereokamera ist.

4. Verfahren nach einem der vorhergehenden Ansprüche, wobei mindestens ein 3D-Platzhalter (6) entsprechend des Ergebnisses der Klassifizierung des oder der Objekte (2, 3) im 2D-Bild (5) bestimmt und als Platzhalter für dieses Objekt im dreidimensionalen Bild berücksichtigt wird.

5. Verfahren nach einem der vorhergehenden Ansprüche, wobei der 3D-Platzhalter (6) ein Frustum ist.

6. Verfahren nach einem der vorhergehenden Ansprüche, wobei der 3D-Platzhalter (6) Toleranzen berücksichtigt, die sich aus der 3D- und/oder 2D-Bilderfassung und -auswertung ergeben.

7. Verfahren nach einem der vorhergehenden Ansprüche, wobei der 3D-Platzhalter (6) die Streuung von 3D-Abmessungen innerhalb einer Klasse von Objekten berücksichtigt.

8. Verfahren nach einem der vorhergehenden Ansprüche, wobei der 3D-Platzhalter (6) mit dem aus dem dreidimensionalen Bild gebildeten dreidimensional zusammenhängenden Objekt (1) verglichen wird und bei annähernder Übereinstimmung keine Teilung des dreidimensional zusammenhängenden Objekts vorgenommen wird.

9. Verfahren nach einem der vorhergehenden Ansprüche, wobei unter Berücksichtigung des mindestens einen 3D-Platzhalters (6) aus dem dreidimensionalen Bild erneut Objekte gebildet werden, wobei eine Objektbildung über die Grenzen des 3D-Platzhalters (6) hinaus erschwert wird.

10. Vorrichtung zur Objekterkennung in einem Fahrzeugumfeld umfassend
eine 3D-Kamera, die eingerichtet ist, ein dreidimensionales Bild zu erfassen,
eine erste Objektbildungseinheit, die eingerichtet ist, mindestens ein dreidimensional zusammenhängendes Objekt aus dem dreidimensionalen Bild zu bilden,
einen Kamerasensor, der einrichtet ist, ein 2D-Bild (5) aufzunehmen,
eine 2D-Bild-Auswertungs- und Klassifikationseinheit, die eingerichtet ist,
ein oder mehrere Objekte (2, 3) in einem Bildbereich des 2D-Bildes (5) zu klassifizieren, der dem mindestens einen gebildeten dreidimensional zusammenhängenden Objekt im dreidimensionalen Bild (1) entspricht,
typische klassenspezifische 3D-Abmessungen aufgrund des oder der klassifizierten Objekte (2, 3) im 2D-Bild zuzuordnen, und
eine Objektteilungseinheit, die dazu eingerichtet ist,
das aus dem dreidimensionalen Bild gebildete dreidimensional zusammenhängende Objekt (1) unter Berücksichtigung der typischen klassenspezifischen 3D-Abmessungen des oder der klassifizierten Objekte (2, 3) in mehrere einzelne dreidimensionale Objekte (2; 3) zu teilen, wenn das gebildete dreidimensional zusammenhängende Objekt zu ausgedehnt ist für die zugeordneten typischen klassenspezifischen 3D-Abmessungen des oder der Objekte (2, 3).

## Claims

1. Method for object recognition, comprising the steps of:
- forming a three-dimensionally contiguous object from a three-dimensional image of a 3D camera,
= evaluating and classifying one or more objects (2, 3) in an image region of a 2D image (5) which corresponds to the formed three-dimensionally contiguous object in the three-dimensional image (1),
- assigning typical class-specific 3D dimensions on the basis of the classification of the object or objects (2, 3) in the 2D image,
- dividing the three-dimensionally contiguous object (1) formed from the three-dimensional image into a plurality of individual three-dimensional objects (2; 3) taking into account the class-specific 3D dimensions if the formed three-dimensionally contiguous object is too extended for the assigned class-specific 3D dimensions of the classified object or objects (2, 3).

2. Method according to Claim 1, wherein the three-dimensional image is captured by means of a 3D camera, in particular a vehicle stereo camera of a driver assistance system, and the 2D image (5) is captured by means of a monocular camera sensor of a driver assistance system and they represent at least partially overlapping regions of a surrounding area of the vehicle.

3. Method according to Claim 2, wherein the monocular camera sensor is one of the two camera sensors of a vehicle stereo camera.

4. Method according to one of the preceding claims, wherein at least one 3D placeholder (6) corresponding to the result of the classification of the object or objects (2, 3) in the 2D image (5) is determined and taken into account as a placeholder for this object in the three-dimensional image.

5. Method according to one of the preceding claims, wherein the 3D placeholder (6) is a frustum.

6. Method according to one of the preceding claims, wherein the 3D placeholder (6) takes into account tolerances resulting from the 3D and/or 2D image capturing and evaluation.

7. Method according to one of the preceding claims, wherein the 3D placeholder (6) takes into account the dispersion of 3D dimensions within a class of objects.

8. Method according to one of the preceding claims, wherein the 3D placeholder (6) is compared with the three-dimensionally contiguous object (1) formed from the three-dimensional image and, if there is an approximate match, the three-dimensionally contiguous object is not divided.

9. Method according to one of the preceding claims, wherein objects are again formed from the three-dimensional image taking into account the at least one 3D placeholder (6), wherein object forming is made more difficult beyond the limits of the 3D placeholder (6).

10. Apparatus for object recognition in a vehicle vicinity, comprising
a 3D camera, which is configured to capture a three-dimensional image,
a first object-forming unit, which is configured to form at least one three-dimensionally contiguous object from the three-dimensional image,
a camera sensor, which is configured to record a 2D image (5),
a 2D image evaluation and classification unit, which is configured to
classify one or more objects (2, 3) in an image region of the 2D image (5) which corresponds to the at least one formed three-dimensionally contiguous object in the three-dimensional image (1),
assign typical class-specific 3D dimensions on the basis of the classified object or objects (2, 3) in the 2D image, and
an object dividing unit, which is configured to divide the three-dimensionally contiguous object (1) formed from the three-dimensional image into a plurality of individual three-dimensional objects (2; 3) taking into account the typical class-specific 3D dimensions of the classified object or objects (2, 3) if the formed three-dimensionally contiguous object is too extended for the assigned typical class-specific 3D dimensions of the object or objects (2, 3).

## Revendications

1. Procédé de reconnaissance d'objet, comprenant les étapes suivantes :
- formation d'un objet cohérent tridimensionnel à partir d'une image tridimensionnelle d'une caméra 3D,
- interprétation et classification d'un ou plusieurs objets (2, 3) dans une zone d'image d'une image 2D (5), laquelle correspond à l'objet cohérent tridimensionnel formé dans l'image tridimensionnelle (1),
- attribution de dimensions 3D spécifiques à la classe typiques sur la base de la classification de l'objet ou des objets (2, 3) dans l'image 2D,
- division de l'objet cohérent tridimensionnel (1) formé à partir de l'image tridimensionnelle en plusieurs objets (2 ; 3) tridimensionnels individuels en tenant compte des dimensions 3D spécifiques à la classe lorsque l'objet cohérent tridimensionnel formé est trop étendu pour les dimensions 3D spécifiques à la classe attribuées du ou des objets (2, 3) classifiés.

2. Procédé selon la revendication 1, l'image tridimensionnelle étant capturée au moyen d'une caméra 3D, notamment une caméra stéréoscopique de véhicule d'un système d'assistance à la conduite et l'image 2D (5) au moyen d'un capteur de caméra monoculaire d'un système d'assistance à la conduite et lesdites images représentant des zones qui se chevauchent au moins partiellement de l'environnement d'un véhicule.

3. Procédé selon la revendication 2, le capteur de caméra monoculaire étant l'un des deux capteurs de caméra d'une caméra stéréoscopique de véhicule.

4. Procédé selon l'une des revendications précédentes, au moins un espace réservé 3D (6) correspondant au résultat de la classification du ou des objets (2, 3) étant déterminé dans l'image 2D (5) et pris en compte comme espace réservé pour cet objet dans l'image tridimensionnelle.

5. Procédé selon l'une des revendications précédentes, l'espace réservé 3D (6) étant un tronc.

6. Procédé selon l'une des revendications précédentes, l'espace réservé 3D (6) tenant compte des tolérances qui résultent de la capture et de l'interprétation de l'image 3D et/ou 2D.

7. Procédé selon l'une des revendications précédentes, l'espace réservé 3D (6) tenant compte de la dispersion des dimensions 3D à l'intérieur d'une classe d'objets.

8. Procédé selon l'une des revendications précédentes, l'espace réservé 3D (6) étant comparé à l'objet cohérent tridimensionnel (1) formé à partir de l'image tridimensionnelle et aucune division de l'objet cohérent tridimensionnel n'étant effectuée dans le cas d'une concordance approximative.

9. Procédé selon l'une des revendications précédentes, des objets étant de nouveau formés à partir de l'image tridimensionnelle en tenant compte de l'au moins un espace réservé 3D (6), une formation d'objet au-delà des limites de l'espace réservé 3D (6) étant rendue difficile.

10. Arrangement pour la reconnaissance d'objet dans l'environnement d'un véhicule, comprenant :
une caméra 3D qui est conçue pour capturer une image tridimensionnelle,
une première unité de formation d'objet qui est conçue pour former au moins un objet cohérent tridimensionnel à partir de l'image tridimensionnelle,
un capteur de caméra qui est conçu pour enregistrer une image 2D (5),
une unité d'interprétation et de classification d'image 2D qui est conçue pour
classifier un ou plusieurs objets (2, 3) dans une zone d'image de l'image 2D (5), laquelle correspond à l'au moins un objet cohérent tridimensionnel formé dans l'image tridimensionnelle (1),
attribuer des dimensions 3D spécifiques à la classe typiques sur la base du ou des objets (2, 3) classifiés dans l'image 2D, et
une unité de vision d'objet qui est conçue pour diviser l'objet cohérent tridimensionnel (1) formé à partir de l'image tridimensionnelle en plusieurs objets (2 ; 3) tridimensionnels individuels en tenant compte des dimensions 3D spécifiques à la classe du ou des objets (2, 3) classifiés lorsque l'objet cohérent tridimensionnel formé est trop étendu pour les dimensions 3D spécifiques à la classe attribuées du ou des objets (2, 3).
